Europäisches Patentamt

European Patent Office

Office européen des brevets

(11) Veröffentlichungsnummer: **0 496 228 A1**

## EUROPÄISCHE PATENTANMELDUNG

(21) Anmeldenummer: **92100390.1**

(22) Anmeldetag: **11.01.92**

(51) Int. Cl.5: **F25B 49/00**

(30) Priorität: **24.01.91 DE 4102245**

(43) Veröffentlichungstag der Anmeldung:
**29.07.92 Patentblatt 92/31**

(84) Benannte Vertragsstaaten:
**AT BE CH DE DK ES FR GB IT LI NL SE**

(71) Anmelder: **ILKA MASCHINENFABRIK HALLE GmbH**
**Postfach 624**
**O-4002 Halle(DE)**

(72) Erfinder: **Venner, Jürgen**
**Ehm-Welk-Strasse 04**
**O-4090 Halle(DE)**
Erfinder: **Sabath, Ulrich**
**Franz-Mehring-Strasse 21**

**O-4059 Halle(DE)**
Erfinder: **Borchard, Knut**
**Drosselweg 1**
**O-4200 Merseburg(DE)**
Erfinder: **Saupe, Gotthard**
**Vogelweide 53**
**O-4070Halle(DE)**
Erfinder: **Franke, Achim**
**Ernst-Barlach-Ring 27**
**O-4090 Halle(DE)**
Erfinder: **Jung, Peter**
**Azallenstrasee 47**
**O-4090 Halle(DE)**
Erfinder: **Schmidt, Hans-Günther**
**Sudetenstrasse 47**
**W-6203 Hochheim(DE)**

(54) **Sicherheitseinrichtung für Kälteaggregate mit Ammoniak als Kältemittel.**

(57) Bei Kälteaggregaten mit Ammoniak als Kältemittel kommt es wegen unvermeidlicher geringer Undichtigkeiten sowie bei Havarien zum Austritt des bereits in geringer Konzentration giftigen Ammoniaks. Die Sicherheitseinrichtung soll aus einer das oder die Kälteaggregat(e) (18; 19; 20) umgebenden gasdichten fast drucklosen Hülle (1) das laufend und bei Havarien austretende Ammoniak absorbieren. Dazu befindet sich eine Umwälzfördereinrichtung (4) für Ammoniak-Luft-Gemisch im Hülleninnenraum (14), in deren Kreislauf ein Absorptionsbehälter (7) mit Absorptionsflüssigkeit einbezogen ist. Sie absorbiert die geringen Mengen ständig austretendes Ammoniak. Bei Havarien, also bei plötzlich austretenden größeren Mengen Ammoniak, tritt die Absorptionseinrichtung (6) in Funktion, die zwischen dem Hülleninnenraum (14) und der Außenluft angeordnet ist. Sie besteht aus mehreren übereinander in einem Behälter angeordneten mit Absorptionsflüssigkeit beaufschlagten Absorptionsstufen (7; 8; 9;), ähnlich einer Rektifiziereinrichtung mit Glockenböden (16). Die unterste Absorptionsstufe (7) kann gleichzeitig als Absorptionsbehälter in den Kreislauf der Umwälzfördereinrichtung (4) einbezogen sein.

EP 0 496 228 A1

Rank Xerox (UK) Business Services

Die Erfindung bezieht sich auf eine Sicherheitseinrichtung für Kälteaggregate mit Ammoniak als Kältemittel, gebildet aus einer das oder die Kältaggregat(e) umgebenden gasdichten Hülle und einer Einrichtung zur Absorption von Ammoniak mittels Flüssigkeit aus dem Ammoniak-Luft-Gemisch bei Undichtigkeiten und Havarien.

In den letzten Jahrzehnten hat die Verwendung von Fluorchlorkohlenwasserstoffen (FCKW, H-FCKW) weite Verbreitung gefunden. Diese Kältemittel haben gute thermodynamische Eigenschaften, sind nicht gesundheitsschädlich und geruchlos. Sie ermöglichen die Aufstellung von Kälteanlagen direkt in Gebäuden, in denen sich viele Menschen aufhalten, beispielsweise zur Versorgung der Klimaanlagen mit kaltem Wasser als Kälteträger in Wohnhäusern, Hotels und ähnlichen Objekten. Seit einigen Jahren ist es bekannt, daß diese Kältemittel die Erdatmosphäre stark schädigen. Es ist in Kürze mit einem absoluten Verwendunsverbot von FCKW zu rechnen. Da Austauschkältemittel mit gleich guten thermodynamischen Eigenschaften nicht zu Verfügung stehen, vollzieht sich derzeit in der Kältetechnik ein Rückgriff auf das seit dem Ursprung der Kältetechnik verwendete Ammoniak. Wegen seiner Giftigkeit sind besondere Sicherheitseinrichtungen, die den Austritt von Ammoniak in die Umgebung während des Betriebes des Aggregates und bei Havarien verhindern, erforderlich, wenn sich viele Menschen in der Nähe der Kälteanlage aufhalten.

Aus der DD-PS 251 605 ist eine Sicherheitseinrichtung an einer Kälteanlage mit Wasser als Kälteträgerflüssigkeit und Ammoniak als Kältemittel bekannt. Sie verfolgt den Zweck, bei inneren Undichtigkeiten und Havarien in den Kälteträger übertretendes Ammoniak festzustellen und als Reaktion darauf den Kälteträgerfluß zu unterbrechen. Für äußere Havarien, das heißt, bei Austritt von Ammoniak in die Umgebung, wirkt diese Sicherheitseinrichtung nicht. Zur Lösung dieses Problems bietet es sich für den Fachmann an, das Kälteaggregat mit einer Hülle zu umgeben. Die Anregung dazu gibt die Kleinkältetechnik, die eine druckfeste Kapsel um den Kompressor verwendet. Nähere Überlegungen zeigen jedoch erhebliche Schwierigkeiten auf. Die Kapsel muß druckfest ausgeführt sein und die gesamte Ammoniakfüllung des Aggregates im Havariefall aufnehmen können. Bei größeren Aggregaten führt das zu schweren, sperrigen und teueren Ausführungen. Bei Havarien und Reparaturen muß das in der Kapsel eingeschlossene Ammoniak-Luft-Gemisch mit besonderen Einrichtungen entfernt werden, was weitere Aufwendungen erfordert. Die für den Antrieb der Kompressoren üblichen Elektromotoren sind an die aus dem Kompressor herausgeführte Antriebswelle gekuppelt. Eine absolute Abdichtung der Antriebswelle ist auch mit modernen Gleitringdichtungen nicht möglich. Ständig treten geringe Mengen Ammoniak aus. Das führt im Laufe der Zeit zum Druckanstieg in der Kapsel und zu einer hohen Konzentration von Ammoniak. Die Motorwicklung ist meist nicht beständig gegen Ammoniak, so daß auch aus diesem Grunde das Ammoniak ständig aus dem Innenraum der Kapsel abgeführt werden muß, um eine den Motor schädigende Konzentration von Ammoniak zu vermeiden. Neben der druckfesten Ausführung sind also weitere aufwendige Einrichtungen erforderlich.

Zur Absorption von Ammoniak ist es üblich, eine Flüssigkeit zu verwenden, die große Mengen Ammoniak aufnehmen kann. Handelt es sich um reines Ammoniak, kann es leicht durch einfaches Einleiten in die Flüssigkeit von dieser absorbiert werden. Schwieriger gestaltet es sich jedoch, wenn aus einem Gemisch von Ammoniak und Luft, wie es im Innenraum der Kapsel vorhanden ist, das Ammoniak abgetrennt werden soll. Ein solcher Fall ist aus der Behandlung von Textilien mit Ammoniak bekannt. In einem aufwendigen Apparat erfolgt die Absorption von Ammoniak aus dem Gemisch mit Luft durch Wasser in mehreren Stufen. Es handelt sich um ständig in großen Mengen anfallendes Ammoniak-Luft-Gemisch (DE-OS Nr. 24 31 308)

Die Erfindung, wie sie in den Ansprüchen gekennzeichnet ist, löst die Aufgabe, eine Sicherheitseinrichtung zu schaffen, die aus dem Innenraum einer Kälteaggregate umgebenden Hülle das durch ständige Undichtigkeiten und bei Havarien austretende Ammoniak aus dem Ammoniak-Luft-Gemisch durch Flüssigkeit so zu absorbieren, daß kein Ammoniak in die Umgebung austreten kann und im Innenraum der Hülle kein oder nur ein sehr geringer Überdruck herrscht, ohne direkte Anwesenheit von Absorptionsflüssigkeit im Innenraum.

Die durch die Erfindung erreichten Vorteile sind im wesentlichen darin zu sehen, daß die im Hülleninnenraum gemäß der Erfindung angeordnete Umwälzfördereinrichtung für das Ammoniak-Luft-Gemisch mit dem in ihren Kreislauf einbezogenen Absorptionsbehälter für die ständige Aufnahme und Abführung der aus den unvermeidlichen Undichtigkeiten austretenden geringen Mengen Ammoniak sorgt. Die mehrstufige Absorptionseinrichtung gemäß der Erfindung trennt den Innenraum der Hülle von der Außenluft. Sie tritt nur in Funktion bei Havarien, wenn plötzlich größere Mengen Ammoniak aus einem Kälteaggreagat austreten. Die mehrstufige Ausführung mit den Glockenböden, ähnlich einer Rektifiziereinrichtung, bewirkt eine vollständige Absorption des Ammoniaks aus dem die Absorptionseinrichtung durchströmenden Ammoniak-Luft-Gemisch. Dabei bleibt der Hülleninnenraum gegenüber der Außenluft nahezu drucklos. Damit gestaltet sich deren Konstruktion sehr einfach.

Durch die Einbeziehung der untersten Stufe der Absorptionseinrichtung als Absorptionsbehälter in den Kreislauf der Umwälzfördereinrichtung wird ein gesonderter Absorptionsbehälter nicht benötigt, was die Erfindung weiter vereinfacht. Als Absorptionsflüssigkeit eignen sich alle Flüssigkeiten, die in der Lage sind, größere Mengen Ammoniak zu absorbieren, wie beispielsweise wässrige Lösungen von Säuren oder Alkoholen. Diese Stoffe haben den Vorteil, auch bei niedrigen Außentemperaturen nicht zu gefrieren. Wenn diese Gefahr nicht besteht, kann als besonders einfaches und zweckmäßiges Absorptionsmittel Wasser eingesetzt werden.

Die ein oder mehrere Kälteaggregate umschließende Hülle kann verschiedenartig gestaltet sein. Sie kann beispielsweise aus einem metallischen Gehäuse bestehen, das ein einzelnes Kälteaggregat umschließt, welches damit transportabel ist. Die einzelnen Hüllen mehrere solcher Kälteaggregate können über ein Kanalsystem verbunden werden, so daß für mehrere Kälteaggregate nur eine einzige Sicherheitseinrichtung notwendig ist. Es kann davon ausgegangaen werden, daß eine Havarie mit sehr großer Warscheinlichkeit immer nur ein Kälteaggregat betreffen wird. Die die Kälteaggregate umschließende Hülle kann auch ein feststehendes Bauwerk sein, welches ein oder mehrere Kälteaggregate dicht umschließt. Die erfindungsgemäße Einrichtung läßt sich auch hier in gleicher Weise anbringen. Durch den sehr geringen Innendruck werden keine besonderen Festigkeitsanforderungen an das Bauwerk gestellt.

Im folgenden wird die Erfindung anhand einer lediglich einen Ausführungsweg darstellenden Zeichnung näher erläutert. Sie zeigt das Schema einer Kälteanlage mit drei Kälteaggregaten, die mit dem Kältemittel Ammoniak gefüllt sind.

Die schematisch dargestellten Kälteaggregate 18, 19, und 20 können Kompressionskälteaggregate, bestehend aus den Hauptteilen Kompressor, Verdampfer und Kondensator sein. Die Kälteaggregate können auch Absorptionskälteaggregate sein. Die Anschlußleitungen und Armaturen sind nicht näher dargestellt, da sie für das Verständnis der Erfindung unerheblich sind. Sie sind von einer gasdichten Hülle 1 umgeben. Durch unvermeidliche Undichtigkeiten an den Kälteaggregaten 18, 19, 20 treten ständig geringe Mengen Ammoniak aus. Zu deren Absorption dient erfindungsgemäß die Umwälzfördereinrichtung 4, die Ammoniak-Luft-Gemisch aus dem Hülleninnenraum 14 über die erste Absorptionsstufe 7 der weiter unten beschriebenen Absorptionseinrichtung 6, das Rückschlagventil 3 und die Leitung 22 von Ammoniak befreit zurück in den Hülleninnenraum 14 fördert. Der Konzentrationssensor 2 für Ammoniak schaltet die Umwälzfördereinrichtung 4.

Als Sicherheitseinrichtung zur Aufnahme von Ammoniak im Falle einer Haverie ist nach der Erfindung an die Hülle 1 die Absorptionseinrichtung 6 angeschlossen. Sie besteht aus den drei Absorptionsstufen 7, 8 und 9. Als Absorptionsflüssigkeit wird in diesem Ausführungsbeispiel Wasser verwendet. In jeder Absorptionsstufe 7, 8, 9 sind in das Wasser hineinragende Glocken 16, in gleicher Art wie bei einer Rektifiziereinrichtung angeordnet. Das Einfüllen des Wassers erfolgt über den Füllanschluß 17. Die Überlaufrohre 15 zwischen den Absorptionsstufen 7, 8, 9 gewährleisten den Zufluß und bestimmen die geodätische Höhe des Wasserstandes. Wasser kann im Bedarf über die Anschlüsse 13 abgelassen und einer nicht näher dargestellten Entsorgungseinrichtung zugeführt werden. Die Absorptionseinrichtung 6 tritt nur bei Havarien in Aktion. Im normalen Betriebsablauf bewirkt sie einen Abschluß gegenüber der Außenluft.

Die hydraulische Druckausgleichseinrichtung 5 ist mit der ersten Absorptionsstufe 7 kommunizierend verbunden, so daß sich der gleiche Flüssigkeitsstand einstellt. Das Ausgleichsrohr 21 sorgt für den Druckausgleich zwischen der Außenluft und der Saugseite der Umwälzfördereinrichtung 4, ohne daß im Stillstand der Umwälzfördereinrichtung 4 oder bei starkem Druckanstieg im Hülleninneraum 14, Gas aus dem Hülleninnenraum 14 an die Außenluft entweichen kann und auch während des Laufes der Umwälzfördereinrichtung keine Flüssigkeit aus den Absorptionsstufen 8 und 9 in die Absorptionsstufe 7 verlagert wird.

Bei einem Havariefall kann davon ausgegangen werden, daß nur bei einem der Kälteaggregate 18,19, oder 20 eine solche Havarie auftritt. Die Flüssigkeitsmenge in den Absorptionsstufen 7, 8 und 9 ist so bemessen, daß sie die größte Füllung eines einzelnen Aggregates aufnehmen kann. Bei einem solchen angenommenen Havariefall tritt das Ammoniak-Luft-Gemisch über den Gaseintrittsstutzen 12 unter die Glocke 16 der ersten Absorptionsstufe 7. Es durchströmt das Wasser. Ein großer Teil des Ammoniaks wird absorbiert. Danach gelangt das Ammoniak-Luft-Gemisch unter die Glocke 16 der zweiten Absorptionsstufe 8, wo eine weitere Aufnahme von Ammoniak erfolgt. Das von Ammoniak schon weitgehend befreite Ammoniak-Luft-Gemisch strömt dann zur Glocke 16 in der dritten Absorptionsstufe 9, wo die Aufnahme des restlichen Ammoniaks durch das Wasser erfolgt. Ammoniak kann somit nicht in die Außenluft gelangen. Ein Tropfenabscheider 10 und die Abdeckung 11 vervollständigen die Einrichtung.

Die Erfindung ist nicht auf die Anwendung von Ammoniak als Kältemittel beschränkt. Sie kann auch bei Verwendung anderer giftiger Kältemittel, wie zum Beispiel Schwefeldioxid, angewendet werden, soweit die Absorption dieser Kältemittel durch eine Flüssigkeit möglich ist. Die Erfindung kann sinngemäß auch auf andere Anwendungsfälle, bei denen der Austritt von Gasen in die Atmosphäre verhindert werden soll und die von einer Flüssigkeit absorbiert werden können, übertragen werden.

Aufstellung der Bezugszeichen

| 1 | gasdichte Hülle |
|---|---|
| 2 | Konzentrationssensor |
| 3 | Rückschlagventil |
| 4 | Umwälzfördereinrichtung |
| 5 | hydraulische Druckausgleichseinrichtung |
| 6 | Absorptionseinrichtung |
| 7 | erste Absorptionsstufe |
| 8 | zweite Absorptionsstufe |
| 9 | dritte Absorptionsstufe |
| 10 | Tropfenabscheider |
| 11 | Abdeckung |
| 12 | Gaseintrittsstutzen |
| 13 | Anschlüsse |
| 14 | Hülleninnenraum |
| 15 | Überlaufrohre |
| 16 | Glocken |
| 17 | Füllanschluß |
| 18 | Kälteaggregat |
| 19 | Kälteaggregat |
| 20 | Kälteaggregat |
| 21 | Ausgleichsrohr |
| 22 | Leitung |

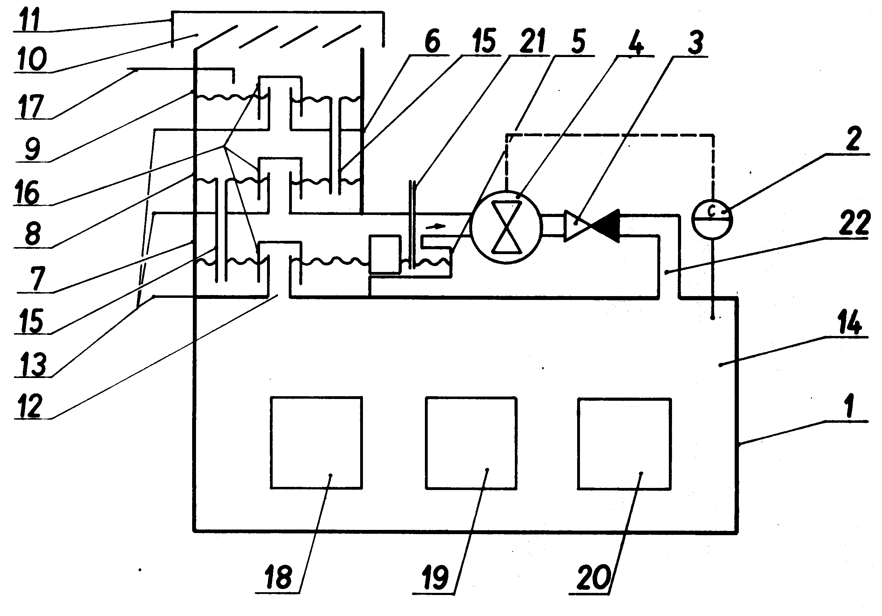

**Patentansprüche**

1. Sicherheitseinrichtung für Kälteaggregate mit Ammoniak als Kältemittel, gebildet aus einer das oder die Kältaggregat(e) (18;19;20) umgebenden gasdichten Hülle (1) und einer Einrichtung (6) zur Absorption von Ammoniak mittels Flüssigkeit aus dem Ammoniak-Luft-Gemisch bei Undichtigkeiten und Havarien, gekennzeichnet dadurch, daß sich im Hülleninnenraum (14) eine Umwälzfördereinrichtung (4) für das Ammoniak-Luft-Gemisch befindet, in deren Kreislauf ein Absorptionsbehälter (7) mit einer Absorptionsflüssigkeit einbezogen ist, und eine Absorptionseinrichtung (6), bestehend aus mehreren übereinander in einem Behälter angeordnete mit Absorptionsflüssigkeit beaufschlagte Absorptionsstufen (7;8;9) zwischen der Außenluft und dem Hülleninnenraum (14) angeordnet ist.

2. Sicherheitseinrichtung nach Patentanspruch 1, gekennzeichnet dadurch, daß die Absorptionsstufen (7;8;9) als Glockenböden (16) ausgebildet sind und als mehrstufige Rektifiziereinrichtung wirken.

3. Sicherheitseinrichtung nach Patentanspruch 1, gekennzeichnet dadurch, daß die unterste Absorptionsstufe (7) in den Kreislauf der Umwälzfördereinrichtung (4) eingebunden ist.

4. Sicherheitseinrichtung nach den Patentansprüchen 1 bis 3 gekennzeichnet dadurch, daß die Absorptionsflüssigkeit Wasser ist.

Europäisches
Patentamt

**EUROPÄISCHER RECHERCHENBERICHT**

Nummer der Anmeldung

EP    92 10 0390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 018 881 (SOCIETE CHIMIQUE DES CHARBONNAGE) <br> * Seite 7, Zeile 35 - Seite 9; Abbildung * <br> --- | 1,5,8,9 | F25B49/00 |
| A,D | DE-A-2 431 308 (CLUETT,PEABODY & CO) <br><br> * Seite 6 - Seite 9; Abbildung * <br> --- | 1,2,5,8,9 | |
| A | US-A-4 153 435 (FISCHER) <br> * Spalte 2, Zeile 60 - Spalte 6, Zeile 16; Abbildungen 2,3,7,8 * <br> --- | 1,5,8,9 | |
| T | EP-A-0 451 325 (AERO-TECH GESELLSCHAFT FUR KLIMA- UND KÄLTETECHNIK) <br><br> ----- | | |

|  |
|---|
| **RECHERCHIERTE SACHGEBIETE (Int. Cl.5)** |
| F25B <br> F25D <br> B01J <br> B01D |

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1992 | BAECKLUND O.A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument